# EUROPEAN PATENT SPECIFICATION

(11) **EP 1 692 189 B1**
(45) Date of publication and mention of the grant of the patent: **04.04.2007**
(21) Application number: 04807049.4
(22) Date of filing: 08.12.2004
(51) Int. Cl.: C08C 1/12, C08L 7/00, C08L 7/02

(54) **METHOD FOR PRODUCING RUBBER FROM RUBBER LATEX**
VERFAHREN ZUR HERSTELLUNG VON KAUTSCHUK AUS KAUTSCHUKLATEX
METHODE DE PRODUCTION DE CAOUTCHOUC A PARTIR DE LATEX DE CAOUTCHOUC

(30) Priority: 12.12.2003 JP 2003415058; 17.11.2004 JP 2004333190
(43) Date of publication of application: 23.08.2006
(73) Proprietor: THE YOKOHAMA RUBBER CO., LTD., Tokyo 105-8685 (JP)
(72) Inventor: Kanenari, Daisuke, c/o The Yokohama Rubber Co. Ltd, Hiratsuka-shi, Kanagawa 2548601 (JP); Kawazura, Tetsuji, c/o The Yokohama Rubber Co. Ltd, Hiratsuka-shi, Kanagawa 2548601 (JP); Suzuki, Yousuke, c/o The Yokohama Rubber Co., Ltd, Hiratsuka-shi, Kanagawa 2548601 (JP)
(74) Representative: HOFFMANN EITLE
(86) International application number: PCT/JP2004/018690
(87) International publication number: WO 2005/056611

(56) References cited:
- US-A- 4 708 159
- US-A- 4 859 248
- US-A- 5 252 061
- LIU X D ET AL MUJUMDAR A S (ED ): "PULSE COMBUSTION DRYING" DRYING '98. PROCEEDINGS OF THE 11TH INTERNATIONAL DRYING SYMPOSIUM. IDS '98. HALKIDIKI, AUG. 19 - 22, 1998, DRYING. INTERNATIONAL DRYING SYMPOSIA, THESSALONIKI : ZITI EDITIONS, GR, vol. VOL. A, 1998, pages 496-503, XP000788172 ISBN: 960-431-468-8

## Description

### TECHNICAL FIELD

The present invention relates to a method for producing rubber from a rubber latex. More specifically, it relates to a method for producing rubber, particularly natural rubber, from a rubber latex providing a good productivity and heat efficiency and suppressing degradation of the quality of the rubber.

### PRIOR ART

At the present time, natural rubber is being produced by manually obtained from rubber trees, followed by filtering, then coagulating and drying the latex, then shipping the natural rubber in the form of a sheet or block from the countries of origin. In this way, even at the present, where the importance of natural rubber is rather continuing to rise, rubber is produced from rubber latex relying on manual labor. Further, the latex coagulation step, rinsing step and drying step, in particular the drying step, have a large influence on the viscosity of the rubber product. The current method for production of rubber from rubber latex cannot be said to be sufficient in view of the variation in rubber quality. From this viewpoint, Japanese Unexamined Patent Publication (Kokai) No. 2003-26704 proposes a method of production of natural rubber enabling improvements in the productivity and quality.

Further, synthetic rubber latex obtained from emulsion polymerization is produced by adding brine and acids such as weak sulfuric acid for coagulation, separating the crumbs thus obtained from the serum, followed by washing, then charging the crumbs into a screw extruder type dryer for drying, and weighing and packaging the rubber. Like natural rubber, the step from coagulation to removal of water takes time. Large facilities are required at the present.

### DISCLOSURE OF THE INVENTION

Accordingly, the objects of the present invention are to provide a method for producing rubber having superior quality and having largely improved work efficiency and heat efficiency and providing rubber suppressed in the heat degradation and gelling of rubber liable to occur in conventional drying by heat when producing the widely used rubber latexes including not only natural rubber, but also synthetic rubber obtained from emulsion polymerization.

In accordance with the present invention, there is provided a method for producing rubber from a rubber latex comprising spraying a rubber latex into an atmosphere of a shock wave generated from pulse combustion to thereby dry the rubber.

In accordance with the present invention, there is also provided a method for producing natural rubber using, as a rubber latex, a natural rubber latex containg a viscosity stabilizer.

According to the present invention, instead of conventional processes such as coagulation with an acid, etc., natural coagulation, pulse combustion is used to instantaneously dry the rubber latex, and therefor, a major increase in productivity and heat efficiency is achieved and the heat degradation or gelling of rubber occurring with conventional drying by heat is suppressed. As a result, control of the rubber quality becomes extremely easier. Further, there are the advantages that, due to the gelling being suppressed, the viscosity is decreased and the mixing process of the rubber can be streamlined from the past.

### BEST MODE FOR CARRING OUT THE INVENTION

It must be noted that, as used herein and in the appended claims, the singular forms such as "a", "an" and "the" include plural reference unless the context clearly indicates otherwise.

According to the present invention, natural rubber latex or synthetic rubber latex synthesized from emulsion polymerization is dried to produce rubber using a pulse combustor generating a shock wave described for example in Japanese Unexamined Patent Publication (Kokai) No. 7-71875. In the present invention, such a pulse combustor is used to spray dry a latex having a solid concentration of 60% by weight or less in a drying chamber under conditions of a frequency of 250 to 1200 Hz, more preferably 300 to 1000 Hz, and a temperature of not more than 140°C, more preferably 40 to 100°C.

The solid (i.e., dried rubber) concentration of the rubber latex dried according to the present invention is preferably 60% by weight or less, more preferably 20 to 50% by weight. If the solid concentration is more than 60% by weight, the viscosity of the latex becomes higher and simultaneously the latex stability is decreased. As a result, when the latex is charged into a shock wave dryer, the latex may coagulate in the transport pipe or, may not be able to be sprayed well into the combustion chamber, or other problems may occur. Further, if the solid concentration is too low, the drying itself will not be a problem, but the amount of latex capable of drying in a unit time is decreased and the productivity will deteriorate, and therefor practical problems will sometimes occur.

The viscosity of natural rubber is known to generally increase along with time. Therefore, a viscosity stabilizing agent is sometimes introduced into the natural rubber to suppress the increase in the viscosity of natural rubber. In the present invention, it is possible to optionally blend a viscosity stabilizing agent into the natural rubber latex to be pulse dried in an atmosphere of a shock wave generated from the present pulse combustion.

It is possible to use any viscosity stabilizing agent generally used in the past, which is not liable to break down under the above pulse drying conditions used in the present invention. Specifically, for example, one or more of hydroxylamines, semicarbazides and dimedones may be used. These viscosity stabilizing agents are added in an amount of at least 0.001 part by weight, preferably 0.01 to 3 part by weight, based upon 100 parts by weight of solids (i.e., dried rubber) in the starting natural rubber latex. If the amount of the viscosity stabilizing agent is too small, the viscosity stabilizing effect is liable to be not sufficient.

Specific examples of the viscosity stabilizing agents include, for example, hydroxylamine sulfate (NH₂OH)₂·H₂SO₄), semicarbazide (NH₂CONHNH₂), dimedone (i.e., 1,1-dimethylcyclohexane-3,5-dione), etc. but the scope of the present invention is not limited to these

### examples.

The method for drying the latex according to the present invention can produce a rubber, in which rubber compounding ingredients (for example, antioxidants, various types of carbon blacks, various types of silica, other fillers, oils, plasticizers, cross-linking agents, vulcanization accelerators, vulcanization accelerating aids, peptisers, coupling agents, preservatives) are included in an aqueous solution, aqueous dispersion and/or hydrophilic organic solution of the third ingredients in the latex. Further, it is also possible to premix two or more types of latexes in a desired ratio to directly obtain a blend of different types of rubber.

### EXAMPLES

The present invention will now be explained in detail, but the scope of the present invention is not intended to limit to these Examples.

### Example 1 and Comparative Example 1

The method for producing natural rubber used in the past (i.e., ribbed smoked sheet (RSS)) is shown as Comparative Example 1.

Natural rubber latex was obtained from rubber tree by tapping, foreign matters were removed therefrom, formic acid was added thereto for coagulation, the water content was removed by rolling the latex (i.e., sheeting), then the resulting product was dried. The unsmoked sheet thus obtained was rinsed, then dried at 70°C, while smoking for 6 to 8 days, graded and ranked, then packed.

On the other hand, 5 liters of natural rubber latex (obtained in Thailand, solid concentration of approximately 35% by weight) stabilized by addition of ammonia in Example 1 was filtered to remove impurities, then spray dried using a pulse combustion dryer (made by Pultech corporation, Hypulcon (Brand Name)) under conditions of a frequency of 1000 Hz and a temperature of 60°C. The times necessary for drying in Example 1 and Comparative Example 1 were compared in Table I. As is clear from the results shown in Table I and, in Example 1 according to the present invention, the drying time for processing 5 liters of latex was decreased to about 3 hours. Note that the drying time was the processing capacity of the pulse combustion dryer. The time actually required for the water content to be removed was less than 1 second. The amount of latex which was able to be dried per unit time was determined by the size of the dryer. The processing capacity of the dryer used in Example 1 according to the present invention was about 2 kg/hour.

**Table I**

| Comparative Example 1 (Prior Art) | | Example 1 | |
|---|---|---|---|
| Process | Required time | Process | Required time |
| 1) Tapping (collecting) | - | 1) Tapping (collecting) | - |
| 2) Removal of impurities | - | 2) Removal of impurities | - |
| 3) Addition of acid and coagulation | 0.5 day | 3) Pulse combustion drying | 3 hours |
| 4) Rinsing | 0.5 day | | |
| 5) Drying (smoking) | 6 days | | |
| Total processing time: about 7 days | | Total processing time: 3 hours | |

### Example 2 and Comparative Example 2

The physical properties of the natural rubber obtained in Example 1 and commercially available natural rubber (i.e., RSS#1) were compared. That is, in each of the formulations shown in Table II, the ingredients other than the vulcanization accelerator and sulfur were mixed in a 1.7 liter Banbury mixer for 5 minutes and dumped, when reaching 140°C, to obtain a master batch. The vulcanization accelerator and sulfur were then mixed into this master batch by an 8-inch open roll to obtain a rubber composition. The Mooney viscosity (ML₁₊₄, 100°C) of the unvulcanized rubber composition thus obtained was measured according to a method of JIS K-6300-1. The results are shown in Table II.

Next, each rubber composition obtained above was vulcanized in a 15 x 15 x 0.2 cm mold at 150°C for 30 minutes to prepare a vulcanized rubber sheet, which was then measured for physical properties by the test methods indicated below. The results are shown in Table II.
300% modulus (MPa): measured according to JIS K-6251 (JIS No. 3 Dumbbell)
Strength at break: measured according to JIS K-6251 (JIS No. 3 Dumbbell)
Elongation at break: measured according to JIS K-6251 (JIS No.3 Dumbbell)

As is clear from the results shown in Table II, in Example 2 according to the present invention, the properties at break were similar, the Mooney viscosity was decreased and the workability (or processability) was improved.

**Table II**

| Name of Material (parts by weight) | Comp. Ex. 2 | Ex. 2 |
|---|---|---|
| Natural rubber (RSS#1) | 100 | - |
| Natural rubber*1 | - | 100 |
| HAF grade carbon (Shoblack N339, Showa Cabot) | 50 | 50 |
| Zinc oxide (Zinc Oxide No. 3, Seido Chemical | 3 | 3 |
| Industry) | | |
| Stearic acid (Beads Stearic Acid YR, NOF) | 2 | 2 |
| Aromatic oil (Extract No. 4S, Showa Shell | 5 | 5 |
| Sekiyu) | | |
| Sulfur ("Kinka" sulfur fine powder, Tsurumi | 2 | 2 |
| Chemical) | | |
| Vulcanization accelerator (Noccelar NS-F, | 1 | 1 |
| Ouchi Shinko Chemical Industrial) | | |
| Unvulcanized properties | | |
| Mooney viscosity (ML₁₊₄) | 95 | 91 |
| Vulcanized properties (room temperature) | | |
| 300% Modulus (MPa) | | |
| Tensile strength at break (MPa) | 17.5 | 16.6 |
| Elongation at break (%) | 30.9 | 30.4 |
| | 495 | 516 |

| | | |
|---|---|---|
| *1: Natural rubber produced in Example 1. | | |

### Example 3 and Comparative Example 3

The method for producing of emulsion polymerized SBR used in the past is shown as Comparative Example 3.

After the monomer was removed from the polymerized SBR latex, then sodium chloride was added to make a creamy state, then weak sulfuric acid was added to cause coagulation. The resultant mixture was vigorously stirred by propellers of a coagulation tank, the coagulated crumbs were pulverized, the serum was separated, then the resultant product was washed and passed through a screw extruder type dryer for drying.

On the other hand, in Example 3, 5 liters of SBR latex obtained by emulsion polymerization (A9725HT, made by Nippon Zeon, solid content: 50 wt%) was dried using a shock wave dryer (made by Pultech corporation, Hypulcon (Brand Name), processing capacity 2 kg/h) under conditions of a frequency of 1000 Hz and a temperature of 70°C.

**Table III**

| Comparative Example 3 (Prior Art) | Example 3 | |
|---|---|---|
| Process | Process | |
| Polymerization | Polymerization | |
| ↓ | ↓ | |
| Monomer recovery | Monomer recovery | |
| ↓ | ↓ | |
| Sodium chloride and acid addition and coagulation | Pulse combustion drying | |
| ↓ | 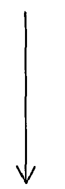 | |
| Pulverization | | |
| ↓ | | |
| Rinsing | | |
| ↓ | | |
| Drying | | |
| ↓ | | |
| Weighing | Weighing | |

| | | |
|---|---|---|
| *(Note) Required times are omitted, because they differ depending on facility and the process is performed continuously. | | |

### Example 4 and Comparative Example 4

The rubber physical properties of synthetic rubber obtained by the method of Example 3 (SBR) were compared with those of the commercially available product (Nipol 1502 made by Nippon Zeon). That is, in each of the formulations shown in Table IV, the ingredients other than the vulcanization accelerator and sulfur were mixed in a 1.7 liter Banbury mixer for 5 minutes and dumped, when reaching 140°C to obtain a master batch. The vulcanization accelerator and sulfur were mixed into this master batch by an open roll to obtain a rubber composition.

Next, the rubber composition thus obtained was vulcanized in a 15 x 15 x 0.2 cm mold at 150°C for 20 minutes to prepare a vulcanized rubber sheet, which was then measured for physical properties according to the test methods indicated above. The results are shown in Table IV. As is clear from the results shown in Table IV, the physical properties are similar to or better than the prior art and free of problems, the Mooney viscosity was decreased and an improvement in workability was observed.

**Table IV**

| Name of materials (parts by weight) | Comp. Ex. 4 | Example 4 |
|---|---|---|
| Comparative Example SBR (Nipol 1502, Nippon Zeon) | 100 | - |
| Example SBR*¹ | - | 100 |
| HAF grade carbon (Shoblack N339, Showa Cabot) | 40 | 40 |
| Zinc oxide (Zinc Oxide No. 3, Seido Chemical | 3 | 3 |
| Industry) | | |
| Stearic acid (Beads Stearic Acid YR, NOF) | 1 | 1 |
| Aromatic oil (Extract No. 4S, Showa Shell | 5 | 5 |
| Sekiyu) | | |
| Sulfur ("Kinka" sulfur fine powder, 150 mesh, | 2 | 2 |
| Tsurumi Chemical) | | |
| Vulcanization accelerator (Noccelar NS-F, | 1 | 1 |
| Ouchi Shinko Chemical Industrial) | | |
| Unvulcanized properties | | |
| Mooney viscosity (ML₁₊₄) | 60 | 57 |
| Vuleanized properties (room temperature) | | |
| 300% modulus (MPa) | 10.8 | 11.2 |
| Tensile strength at break (MPa) | 20.8 | 21.6 |
| Elongation at break (%) | 470 | 476 |

| | | |
|---|---|---|
| *1: SBR produced by the method of Example 3 | | |

### Example 5 and Comparative Examples 5 to 8

The following natural rubbers were used for measurement of the viscosity stabilities and the vulcanized physical properties of the rubber compositions.

Natural rubber of Example 5, (Pulse-NRCV): First, 1000 g of "HA LATEX" (made by Golden Hope Plantation BHD (Malaysia), dried rubber constant (DRC) = 60 wt%) was diluted by 2000 g of water to obtain 3000 g of a DRC=20% NR latex. 6 g of a 10% aqueous solution of hydroxylamine sulfate was added to this NR latex to obtain a viscosity stabilizing agent-containing latex. This viscosity stabilizing agent-containing latex was dried using the shock wave dryer used in Example 1 to obtain the sample.

Natural Rubber of Comparative Examples 5 to 8: The generally available natural rubber SMR CV60, STR20CV60, RSS#3, and STR20 were used. For the reference, the production methods of the commercially available viscosity-stabilized natural rubber are shown below.

SNR CV60: A type of technically specified rubber (TSR) obtained by adding to natural rubber latex an acid or viscosity stabilizer (i.e., hydroxylamine sulfate) in a natural rubber processing factory to coagulate, then washing, breaking, drying, and otherwise processing it. The viscosity stabilizer was added in an amount of 0.05 to 0.10 part by weight, based upon 100 parts by weight of dried rubber.

STR20CV60: A type of technically specified rubber (TSR) obtained by field coagulum (cup lump) to the steps of washing, breaking, and drying in a natural rubber processing factory, then mixing in a viscosity stabilizing agent (i.e., hydroxylamine sulfate) by a prebreaker. The viscosity stabilizing agent was added in an amount of 0.05 to 0.10 part by weight, based upon 100 parts by weight of dried rubber.

In each of the formulations shown in Table V, the ingredients other than the vulcanization accelerator and sulfur were mixed in a 1.7 liter Banbury mixer for 5 minutes and discharged, when reaching 140°C to obtain a master batch. The vulcanization accelerator and sulfur were mixed into this master batch by an 8-inch open roll to obtain a rubber composition.

Next, the rubber composition obtained above was vulcanized in a 15 x 15 x 0.2 cm mold at 150°C for 30 minutes to prepare a vulcanized rubber sheet which was then measured for physical properties according to the test methods indicated above. The results are shown in Table V.

**Table V**

| | | Ex. 5 | Comp. Ex. 5 | Comp. Ex. 6 | Comp. Ex. 7 | Comp. Ex. 8 |
|---|---|---|---|---|---|---|
| Properties of starting material (impurities content)*1 | | 0.01 | 0.01 | 0.10 | 0.05 | 0.09 |
| Viscosity of starting material | Viscosity after 1 week (index) | 101 | 100 | 102 | 113 | 109 |
| | Viscosity after 1 month (index) | 101 | 102 | 107 | 120 | 113 |
| | Viscosity after 3 months (index) | 102 | 103 | 108 | 133 | 120 |
| (Viscosity stability)*2 | | | | | | |
| Formulation | Pulse-NRCV | 100 | - | - | - | - |
| (parts by weight) | SMR CV60 | - | 100 | - | - | - |
| | STR20CV60 | - | - | 100 | - | - |
| | RSS#3 | - | - | - | 100 | - |
| | STR20 | - | - | - | - | 100 |
| | Carbon (HAF grade) (Shoblack N339, Showa Cabot) | 45 | 45 | 45 | 45 | 45 |
| | Zinc oxide (Zinc Oxide No. 3, Seido Chemical Industry) | 5 | 5 | 5 | 5 | 5 |
| | Stearic acid (Beads Stearic Acid YR, NOF) | 3 | 3 | 3 | 3 | 3 |
| | Aromatic oil (Extract No. 4S, Showa Shell Sekiyu) | 6 | 6 | 6 | 6 | 6 |
| | Sulfur ("Kinka" sulfur powder, Tsurumi Chemical) | 2 | 2 | 2 | 2 | 2 |
| | Vulcanization accelerator (Noccelar NS-F, Ouchi Shinko Chemical Industrial) | 0.7 | 0.7 | 0.7 | 0.7 | 0.7 |
| Physical properties after vulcanization*3 | 300% Modulus (index) | 104 | 101 | 96 | 103 | 100 |
| | Tensile strength at break (index) | 108 | 104 | 96 | 101 | 100 |
| | Elongation at break (index) | 98 | 100 | 93 | 100 | 100 |

| | | | | | | |
|---|---|---|---|---|---|---|
| *1: Measured according to ISO 249: 1987 *2: Measured according to ISO 289-2: 1994. The viscosity stability is indexed to the Mooney viscosity right after production and indicates the Mooney viscosity after storage a predetermined time at room temperature. The larger the value, the larger the change in viscosity indicated. *3: Tensile test conducted according to JIS K 6251-1993 using a dumbbell shaped No. 3 test piece at room temperature with a tensile rate of 500 mm/min. The value is indicated indexed to the value of Comparative Example 8 (STR20). The larger the value, the better the physical properties shown. | | | | | | |

### INDUSTRIAL APPLICABILITY

In the rubber production method from a latex according to the present invention, in the case of natural rubber, the latex is obtained by tapping and the impurities etc. filtered from the latex, then the latex is sprayed in an atmosphere of a shock wave generated by pulse combustion, without coagulation by an acid, etc. and the moisture is removed to instantaneously dry the rubber latex, and therefore the processing efficiency and heat efficiency of production of rubber from latex can be improved. Further, the quality of the rubber obtained is not liable to degrade under heat or to gel as in the past and is excellent. Further, even in the case of synthetic rubber obtained by emulsion polymerization, there are no steps of coagulation by an acid, separation of crumbs and serum, washing, and drying, i.e., the water content in the latex can be directly removed by the pulse combustion, and therefore, not only is the production efficiency largely increased, but also the heat history is greatly reduced and the physical properties of the rubber can be improved. Further, adjustment and management of the pH of the crumbs and serum and the salt concentration become unnecessary as well, and therefore the quality of the rubber becomes stable and facilities for the recovery and reuse of acid and measures against corrosion of the same also become unnecessary. The present invention is therefore useful as a rubber production method from natural rubber or other rubber latex.

## Claims

1. A method for producing rubber from a rubber latex comprising spraying a rubber latex into an atmosphere of a shock wave generated from pulse combustion to thereby dry the rubber.

2. A method for producing rubber as claimed in claim 1, wherein a solid concentration of the rubber latex is 60% by weight or less, in terms of dry rubber.

3. A method for producing rubber as claimed in claim 1 or 2, wherein a frequency of the pulse combustion is 250 to 1200 Hz and a temperature of a drying chamber for spraying the latex is 140°C or less.

4. A method for producing rubber as claimed in any one of claims 1 to 3, wherein the rubber latex is a natural rubber latex.

5. A method for producing rubber as claimed in claim 4, further comprising spray drying under an atmosphere of a shock wave generated from the pulse combustion in the presence of a viscosity stabilizing agent added to the natural rubber latex.

6. A method for producing rubber as claimed in claim 5, wherein the amount of the viscosity stabilizing agent is at least 0.001 part by weight based upon 100 parts by weight of solid content in the latex.

7. A method for producing rubber as claimed in claim 5 or 6, wherein the viscosity stabilizing agent is at least one compound selected from the group consisting of hydroxyl amines, semicarbazides and dimedones.

8. A rubber composition obtainable from a method according to claim 1 to 7.

## Patentansprüche

1. Verfahren zur Erzeugung von Gummi aus einem Gummilatex, umfassend das Sprühen eines Gummilatex in eine Atmosphäre aus einer Schockwelle, erzeugt durch Pulsverbrennung, um hierdurch den Gummi zu trocknen.

2. Verfahren zur Erzeugung eines Gummis nach Anspruch 1, worin eine Feststoffkonzentration des Gummilatex 60 Gew.% oder weniger, ausgedrückt als trockener Gummi, ist.

3. Verfahren zur Erzeugung eines Gummis nach Anspruch 1 oder 2, worin die Frequenz der Pulsverbrennung 250 bis 1.200 Hz und die Temperatur der Trocknungskammer zum Sprühen des Latex 140°C oder weniger ist.

4. Verfahren zur Erzeugung eines Gummis nach einem der Ansprüche 1 bis 3, worin der Gummilatex ein natürlicher Gummilatex ist.

5. Verfahren zur Erzeugung von Gummi nach Anspruch 4, weiterhin umfassend das Sprühtrocknen unter einer Atmosphäre einer Schockwelle, erzeugt von der Pulsverbrennung in der Gegenwart eines Viskosität stabilisierenden Mittels, das zum natürlichen Gummilatex gegeben ist.

6. Verfahren zur Erzeugung von Gummi nach Anspruch 5, worin die Menge des Viskosität stabilisierenden Mittels zumindest 0,001 Gewichtsteile bezogen auf 100 Gewichtsteile des Feststoffgehalts im Latex ist.

7. Verfahren zur Erzeugung von Gummi nach Anspruch 5 oder 6, worin das Viskosität stabilisierende Mittel zumindest eine Verbindung ist, ausgewählt aus der Gruppe bestehend aus Hydroxylaminen, Semicarbaziden und Dimedonen.

8. Gummizusammensetzung, erhältlich durch ein Verfahren nach den Ansprüchen 1 bis 7.

## Revendications

1. Procédé pour produire du caoutchouc à partir d'un latex de caoutchouc comprenant la vaporisation d'un latex de caoutchouc dans une atmosphère d'onde de choc générée à partir d'une combustion pulsatoire pour ainsi sécher le caoutchouc.

2. Procédé pour produire du caoutchouc selon la revendication 1, dans lequel une concentration en matière sèche du latex de caoutchouc est de 60 % en poids ou moins, en termes de caoutchouc sec.

3. Procédé pour produire du caoutchouc selon la revendication 1 ou 2, dans lequel une fréquence de la combustion pulsatoire est comprise entre 250 et 1 200 Hz et une température d'une chambre de séchage pour vaporiser le latex est de 140 °C ou moins.

4. Procédé pour produire du caoutchouc selon l'une quelconque des revendications 1 à 3, dans lequel le latex de caoutchouc est un latex de caoutchouc naturel.

5. Procédé pour produire du caoutchouc selon la revendication 4, comprenant en outre un séchage par vaporisation sous une atmosphère d'une onde de choc générée à partir de la combustion pulsatoire en présence d'un agent stabilisant de viscosité ajouté au latex de caoutchouc naturel.

6. Procédé pour produire du caoutchouc selon la revendication 5, dans lequel la quantité de l'agent de stabilisation de la viscosité est au moins de 0,001 partie en poids sur la base de 100 parties en poids de teneur en matière sèche dans le latex.

7. Procédé pour produire du caoutchouc selon la revendication 5 ou 6, dans lequel l'agent stabilisant de viscosité est au moins un composé sélectionné parmi le groupe constitué par des hydroxylamines, des semicarbazides et des dimédones.

8. Composition de caoutchouc pouvant être obtenue à partir d'un procédé selon les revendications 1 à 7.
